# EUROPÄISCHE PATENTSCHRIFT

(11) **EP 2 843 446 B1**
(45) Veröffentlichungstag und Bekanntmachung des Hinweises auf die Patenterteilung: **24.07.2019**
(21) Anmeldenummer: 13182608.3
(22) Anmeldetag: 02.09.2013
(51) Int. Cl.: G01V 8/14, G01V 8/22, G02B 6/42, G02B 6/28

(54) **Optischer Sensor**
Optical sensor
Capteur optique

(43) Veröffentlichungstag der Anmeldung: 04.03.2015
(73) Patentinhaber: Pepperl & Fuchs GmbH, 68307 Mannheim (DE)
(72) Erfinder: BÜTTNER, Sven, 12161 Berlin (DE)
(74) Vertreter: Schiffer, Axel Martin

(56) Entgegenhaltungen:
- US-A- 4 915 479
- US-A- 5 146 516
- US-A- 5 828 456
- US-A1- 2001 004 413
- US-A1- 2004 111 030
- US-A1- 2004 234 210
- US-A1- 2007 164 241
- US-A1- 2010 265 974
- US-A1- 2013 163 273
- US-B1- 7 099 536

## Beschreibung

Die vorliegende Erfindung bezieht sich auf einen optischen Sensor zum Überwachen eines Überwachungsraums nach dem Oberbegriff des Anspruchs 1.

Ein gattungsgemäßer optischer Sensor zum Überwachen eines Überwachungsraums umfasst mindestens einen Lichtsender zum Aussenden von Sendelicht in den Überwachungsraum und mindestens einen Lichtempfänger zum Messen von nachzuweisendem Licht aus dem Überwachungsraum.

Herkömmliche optische Sensoren haben einen verhältnismäßig komplexen Aufbau. So werden mehrere Linsen zur Strahlformung des Sendelichts und des nachzuweisenden Lichts verwendet. Für eine sogenannte Koaxialoptik ist außerdem ein Strahlteiler erforderlich. Bei einer Koaxialoptik stimmt die optische Achse des Sendelichts im Überwachungsraum überein mit der optischen Achse des nachzuweisenden Lichts im Überwachungsraum, welches auf den Lichtempfänger geleitet wird. Weiterhin ist ein Umlenkspiegel erforderlich, damit der Lichtsender und der Lichtempfänger nicht auf zwei verschiedenen, zueinander rechtwinklig angeordneten Leiterplatten montiert werden müssen. Solche optischen Sensoren sind beispielsweise in DE 20 2009 007 612 U1 und in EP 2 256 522 A1 beschrieben.

An diesen Sensoren ist ihr komplexer Aufbau nachteilig. Dieser führt zum einen zu erhöhtem Fertigungsaufwand. Zum anderen sind mit jeder Komponente auch Positionierungsungenauigkeiten und Lichtverluste verbunden, so dass der komplexe Aufbau die Qualität der Strahlführung nachteilig beeinflusst.

Ein gattungsgemäßer optischer Sensor ist beschrieben in US-5,828,456. Verschiedene Lichtleitelemente sind offenbart in US 2004/0111030 A1, US-5,146,516 und US 2010/0265974 A1.

Als eine **Aufgabe** der Erfindung kann angesehen werden, einen optischen Sensor bereitzustellen, welcher bei niedrigen Herstellungskosten Sendelicht und nachzuweisendes Licht möglichst präzise führt.

Diese Aufgabe wird durch den optischen Sensor mit den Merkmalen des Anspruchs 1 gelöst.

Vorteilhafte Ausgestaltungen des erfindungsgemäßen optischen Sensors sind Gegenstand der abhängigen Ansprüche und werden außerdem in der folgenden Beschreibung, insbesondere im Zusammenhang mit den Figuren, erläutert.

Bei dem optischen Sensor der oben genannten Art ist erfindungsgemäß ein einstückig gefertigtes Lichtführungselement vorhanden zum Leiten von Sendelicht in Richtung des Überwachungsraums und zum Leiten von nachzuweisendem Licht zum Lichtempfänger. Das Lichtführungselement weist auf:
- eine Eintrittsfläche für Sendelicht, an welcher im Betrieb Sendelicht in das Lichtführungselement eintritt,
- eine Endfläche, an welcher im Betrieb Sendelicht aus dem Lichtführungselement in Richtung des Überwachungsraums austritt und an welcher nachzuweisendes Licht aus dem Überwachungsraum in das Lichtführungselement eintritt,
- eine Strahlteilungsfläche mit mindestens einem Transmissionsbereich und mindestens einem Reflexionsbereich, welche so angeordnet sind, dass von der Eintrittsfläche kommendes Sendelicht zur Endfläche geleitet wird und von der Endfläche kommendes nachzuweisendes Licht zumindest teilweise auf einen Strahlengang geleitet wird, der von dem Strahlengang des Sendelichts verschieden ist,
- eine Austrittsfläche für nachzuweisendes Licht, an welcher im Betrieb nachzuweisendes Licht, das von der Strahlteilungsfläche kommt, aus dem Lichtführungselement austritt,
- mindestens eine Umlenkfläche, mit welcher Licht, dessen Strahlengang über den mindestens einen Reflexionsbereich verläuft, innerhalb des Lichtführungselements abgelenkt wird, und
- einen Bereich lichtsammelnder Wirkung zum Konzentrieren, insbesondere Fokussieren, von nachzuweisendem Licht auf den Lichtempfänger.

Als ein zentraler Gedanke der Erfindung kann angesehen werden, ein einstückiges, das heißt monolithisches, Lichtführungselement vorzusehen, welches die Wirkung von mehreren herkömmlichen optischen Elementen erzielt. Dies umfasst die Wirkungen zumindest der folgenden optischen Elemente: eine Linse oder einen Spiegel zur Strahlformung von nachzuweisendem Licht; ein Strahlteiler, auf den sowohl Sendelicht als auch nachzuweisendes Licht geleitet wird; ein Umlenkspiegel, mit dem nachzuweisendes Licht vom Strahlteiler zum Lichtempfänger abgelenkt wird oder mit dem Sendelicht vom Lichtsender zum Strahlteiler abgelenkt wird. Bevorzugt wird mit dem Lichtführungselement zusätzlich die Wirkung einer Linse oder eines Spiegels zur Strahlformung von Sendelicht erzielt.

Vorteilhafterweise sinkt hierdurch gegenüber dem Stand der Technik die erforderliche Anzahl an Komponenten. Dadurch wird der Montageaufwand des Sensors reduziert. Zudem werden Positionierungsungenauigkeiten vermindert.

Die Reduzierung der vorhandenen Komponenten im Vergleich zu herkömmlichen optischen Sensoren wird insbesondere dadurch erreicht, dass kein separater Strahlteiler zum Erzeugen einer Koaxialoptik vorhanden ist. Über verschiedene Flächen, auf welche das Sendelicht und das nachzuweisende Licht treffen, stellt das einstückige Lichtführungselement vielmehr eine Koaxialoptik, eine Lichtumlenkung sowie eine Konzentrierung des nachzuweisenden Lichts bereit.

Zur Konzentrierung des nachzuweisenden Lichts dient ein Bereich lichtsammelnder Wirkung. Dieser Bereich ist gebildet durch eine oder mehrere Flächen des Lichtführungselements, auf welche das nachzuweisende Licht geleitet wird. Vorzugsweise ist dieser Bereich durch die Austrittsfläche gebildet oder mitgebildet. So kann die Austrittsfläche gekrümmt sein, um eine lichtsammelnde Wirkung bereitzustellen. Alternativ oder zusätzlich können auch diffraktive Strukturen mit lichtsammelnder Wirkung an der Austrittsfläche vorgesehen sein.

Die genannten Flächen des Lichtführungselements können an Luft angrenzen und so die beschriebenen Wirkungen erzielen. Eine oder mehrere der Flächen können aber auch zum Erzielen der jeweiligen Wirkung beschichtet sein. Hiermit bleibt der Vorteilerhalten, dass Positionerungenauigkeiten zwischen verschiedenen Komponenten vermieden werden.

Beispielsweise können an der Umlenkfläche und/oder am mindestens einen Reflexionsbereich der Strahlteilungsfläche des Lichtführungselements eine spiegelnde Beschichtung vorgesehen sein. Dadurch werden prinzipiell beliebige Umlenkwinkel ermöglicht.

Für bestimmte Umlenkwinkel kann abhängig vom Material des Lichtführungselements aber auch auf eine spiegelnde Beschichtung verzichtet werden. Erfindungsgemäß bilden die Umlenkfläche und der Reflexionsbereich eine Grenze des Materials des Lichtführungselements zur Umgebungsluft. Die Ausrichtung der Umlenkfläche und des Reflexionsbereichs ist erfindungsgemäß so gewählt, dass weiterzuleitendes Licht unter einem Winkel auftrifft, bei dem Totalreflexion eintritt. Dadurch wirkt die Umlenkfläche als kostengünstiger Spiegel, welcher sogar einen höheren Reflexionsgrad als übliche Spiegel aufweist.

In beiden Fällen verläuft aber Licht, sowohl bevor es auf die Umlenkfläche trifft als auch nach Umlenkung an der Umlenkfläche, innerhalb des Materials des Lichtführungselements.

Zweckmäßigerweise kann das Lichtführungselement für Sendelicht und nachzuweisendes Licht transparent sein. Insbesondere kann es für Licht im sichtbaren, infraroten und/oder ultravioletten Wellenlängenbereich durchlässig sein.

Das Material des Lichtführungselements kann grundsätzlich ein beliebiges, für das verwendete Licht transparentes Material sein. Um bei kostengünstiger Fertigung eine hohe Präzision zu erreichen, wird vorzugsweise Kunststoff verwendet.

Erfindungsgemäß ist das Lichtführungselement ein Kunststoffformteil. Dieses wird vorzugsweise im Spritzguss hergestellt.

Bevorzugt verläuft Licht zwischen der Umlenkfläche und der Strahlteilungsfläche durchgängig innerhalb des Materials des Lichtführungselements. Dadurch wird bei reduzierter Komponentenzahl eine präzise und einfache Strahlführung erreicht.

Für diese Zwecke ist auch eine Formung des Lichtführungselements bevorzugt, bei welcher nachzuweisendes Licht von der Endfläche bis zur Austrittsfläche durchgängig innerhalb des Materials des Lichtführungselements leitbar ist und/oder bei welcher Sendelicht von der Eintrittsfläche bis zur Endfläche durchgängig innerhalb des Materials des Lichtführungselements leitbar ist.

Stattdessen können aber auch im Lichtführungselement ein oder mehrere Hohlräume vorgesehen sein, welche vom Sendelicht und/oder nachzuweisenden Licht durchlaufen werden. Von diesen Hohlräumen abgesehen bewegen sich aber auch bei dieser Ausführung das Sendelicht und das nachzuweisende Licht zwischen den vorgenannten Flächen durchgängig innerhalb des Materials des Lichtführungselements. Der oder die Hohlräume können eine gekrümmte Oberfläche aufweisen, womit für Sendelicht oder nachzuweisendes Licht eine lichtsammelnde Wirkung, eine lichtzerstreuende Wirkung oder eine Ablenkung erzielt wird. Dadurch kann eine besonders kompakte Bauform des Lichtführungselements erreicht werden.

Um von dem Lichtsender divergent abgestrahltes Sendelicht gebündelt in Richtung des Überwachungsraums weiterzuleiten, hat das Lichtführungselement vorzugsweise für Sendelicht eine lichtsammelnde Wirkung. Unter der gebündelten Weiterleitung kann entweder eine Weiterleitung als paralleles Strahlenbündel verstanden werden oder eine Fokussierung auf einen gewünschten Bereich im Überwachungsraum.

Vorzugsweise wird die lichtsammelnde Wirkung für Sendelicht zumindest teilweise durch die Eintrittsfläche erzeugt. Verläuft das Sendelicht über die Umlenkfläche und den mindestens einen Reflexionsbereich der Strahlteilungsfläche, so können eine oder auch beide von diesen ebenfalls zur lichtsammelnden Wirkung beitragen. Ebenso kann auch die Endfläche für eine lichtsammelnde Wirkung gewölbt oder mit diffraktiven, das heißt lichtbeugenden, Strukturen versehen sein.

Zusätzliche Linsen zwischen dem Lichtsender und der Eintrittsfläche und/oder zwischen der Endfläche und dem Überwachungsraum können vorgesehen sein, wodurch gleiche Lichtführungselemente für verschiedene optische Sensoren genutzt werden können, die sich in der Art des Lichtsenders unterscheiden oder in der gewünschten Abstrahlcharakteristik in den Überwachungsraum. Für einen kostengünstigen Aufbau und eine Vermeidung von Positionierungsungenauigkeiten zwischen Komponenten des optischen Sensors kann es aber bevorzugt sein, das solche Linsen nicht vorhanden sind.

Die lichtsammelnde Wirkung des Lichtführungselements ist für nachzuweisendes Licht, welches als paralleles oder annähernd paralleles Strahlenbündel an der Endfläche eintritt, bevorzugt so, dass dieses auf den Lichtempfänger gebündelt wird. In entsprechender Weise hat das Lichtführungselement für Sendelicht, welches von dem Lichtsender divergent ausgeht, vorzugsweise solch eine lichtsammelnde Wirkung, dass dieses als paralleles Strahlenbündel an der Endfläche austritt.

Die Endfläche kann direkt an den Überwachungsraum angrenzen. Es können aber auch zusätzliche Komponenten dazwischen vorhanden sein, beispielsweise ein Polarisationsfilter und/oder ein transparentes Abdeckfenster, mit dem ein Gehäuse des optischen Sensors geschlossen wird. Auch kann eine Lichtleitfaser, eine bewegbare Komponente zur variablen Strahlablenkung oder ein anderes optisch wirksames Element zwischen der Endfläche und dem Überwachungsraum vorgesehen sein.

Mit der Strahlteilungsfläche des Lichtführungselements kann ein koaxialer Strahlengang bewirkt werden, bei dem Sendelicht und der Anteil des nachzuweisende Licht, welches auf den Lichtempfänger geleitet wird, innerhalb des Überwachungsraums eine gemeinsame optische Achse haben. Durch die Umlenkfläche ist ein koaxialer Strahlengang auch dann möglich, wenn Lichtsender und -empfänger auf ein und derselben Leiterplatte montiert sind oder alternativ auf zwei zueinander parallelen Leiterplatten. Eine solche Anordnung von Lichtsender und -empfänger kann für eine kompakte und kostengünstige Bauform gewünscht sein. Dabei können der Lichtsender und der Lichtempfänger insbesondere in einer Ebene angeordnet sein, welche senkrecht zur Ausbreitungsrichtung des Sendelichts an der Endfläche steht. Haben der Lichtsender und der Lichtempfänger unterschiedliche Bauhöhen, so liegen sie bei gemeinsamer Montage auf einer Leiterplatte hingegen nicht in einer Ebene, die senkrecht zu der Ausbreitungsrichtung des Sendelichts an der Endfläche steht. Diese Lage von Lichtsender und -empfänger ist bei der Festlegung der lichtsammelnden Wirkung des Lichtführungselements zu berücksichtigen. So können die Eintrittsfläche für Sendelicht und die Austrittfläche für nachzuweisendes Licht unterschiedliche Brennweiten haben, das heißt unterschiedlich starke lichtsammelnde Wirkungen.

Vorzugsweise ist das Lichtführungselement so geformt, dass eine optische Achse von nachzuweisendem Licht, das von der Austrittsfläche zum Lichtempfänger läuft, parallel liegt zu einer optischen Achse von Sendelicht, das vom Lichtsender zur Eintrittsfläche läuft. Dadurch können der Lichtsender und der -empfänger in einfacher Weise auf einer Leiterplatte montiert werden, wobei ihre Hauptabstrahlrichtung und Hauptempfangsrichtung senkrecht zur Leiterplatte stehen können.

Indem sich das auf die Strahlteilungsfläche treffende Licht bereits innerhalb des Materials des Lichtführungselements befindet, verläuft sowohl an der Strahlteilungsfläche reflektiertes Licht als auch an dieser transmittiertes Licht weiter innerhalb des Materials des Lichtführungselements. Der Transmissionsbereich der Strahlteilungsfläche ist vorzugsweise nicht durch einen Übergang des Lichtführungselements zur Luft oder ein anderes Material gebildet. Vielmehr ist der Transmissionsbereich der Strahlteilungsfläche vorzugsweise ein Flächenausschnitt, auf dessen beiden Seiten sich das Lichtführungselement erstreckt. Dadurch gibt es am Transmissionsbereich keine Brechzahldifferenz und auftreffendes Licht breitet sich ungehindert weiter aus.

Bei einer vorteilhaften Ausführung ist der Transmissionsbereich der Strahlteilungsfläche ein zentraler Bereich der Strahlteilungsfläche. Dieser dient bevorzugt der Weiterleitung von Sendelicht. Er kann eine elliptische Form haben, womit eine geneigte Ausrichtung der Strahlteilungsfläche zum auftreffenden Sendelicht, welches einen kreisförmigen Querschnitt haben kann, berücksichtigt wird. Der Reflexionsbereich der Strahlteilungsfläche kann den Transmissionsbereich umgeben und im Betrieb nachzuweisendes Licht in Richtung der Umlenkfläche und weiter zum Lichtempfänger leiten.

Grundsätzlich kann aber auch in umgekehrter Weise der zentrale Bereich der Strahlteilungsfläche den Reflexionsbereich bilden und Sendelicht, das in diesem Fall von der Umlenkfläche kommt, weiterleiten. Der Reflexionsbereich wird dann vom Transmissionsbereich umgeben, welcher nachzuweisendes Licht in Richtung des Lichtempfängers weiterleitet.

Anwendungsabhängig kann es auch bevorzugt sein, wenn der zentrale Bereich den Transmissionsbereich bildet und nachzuweisendes Licht weiterleitet. Sendelicht wird demnach über den Reflexionsbereich, der den Transmissionsbereich umgeben kann, weitergeleitet.

Schließlich ist es auch möglich, dass der zentrale Bereich den Reflexionsbereich bildet und nachzuweisendes Licht weiterleitet. Dabei wird Sendelicht über den Transmissionsbereich geführt, welcher den Reflexionsbereich umgeben kann.

Durch diese erfindungsgemäße räumliche Trennung des Transmissions- und des Reflexionsbereichs kann vorteilhafterweise vermieden werden, dass unerwünschterweise zurückgeworfenes Sendelicht zum Lichtempfänger geleitet wird. Solche unerwünschten Rückspiegelungen von Sendelicht können beispielsweise an einer Frontscheibe oder einnem Polarisationsfilter auftreten, welche zwischen dem Lichtführungselement und dem Überwachungsraum angeordnet sind.

Der mindestens eine Reflexionsbereich der Strahlteilungsfläche hat bevorzugt eine gewölbte Form zum Bereitstellen einer lichtlenkenden Wirkung für reflektiertes Licht, insbesondere einer lichtsammelnden oder aufweitenden Wirkung. Dadurch kann die Qualität der Strahlführung verbessert werden.

Damit der mindestens eine Reflexionsbereich weitgehend winkelunabhängig auftreffendes Licht reflektiert, kann er als Grenzübergang des Lichtführungselements zu einer Spiegelschicht gebildet sein, welcher auf dem Lichtführungselement angebracht ist. Die Spiegelschicht kann insbesondere ein dielektrisches Schichtsystem umfassen.

Es kann aber auch auf eine Spiegelschicht verzichtet werden, wenn eine Ausrichtung des mindestens einen Reflexionsbereichs so gewählt ist, dass weiterzuleitendes Licht unter einem Winkel auftrifft, bei dem Totalreflexion eintritt. Der Reflexionsbereich ist demnach als Übergang vom Lichtführungselement zu einem Medium mit niedrigerer Brechzahl gebildet. Dieses Medium kann insbesondere Luft sein.

Damit Totalreflexion eintritt, muss der Einfallswinkel des weiterzuleitenden Lichts mindestens arcsin(n2/n1) betragen. Dabei ist n1 die Brechzahl des Materials des Lichtführungselements und n2 die Brechzahl des angrenzenden Mediums niedrigerer Brechzahl.

Auch die Umlenkfläche kann insbesondere mit einer Spiegelschicht gebildet sein oder so ausgerichtet sein, dass bei auftreffendem Licht Totalreflexion eintritt.

Es ist weiterhin bevorzugt, dass die Umlenkfläche gewölbt ist zum Bereitstellen einer fokussierenden Wirkung von auftreffendem Licht. Für eine aufwändigere Strahlführung können grundsätzlich auch mehrere Umlenkflächen an dem Lichtführungselement gebildet sein, die das Sendelicht oder nachzuweisende Licht mehrfach umlenken. Alternativ oder zusätzlich kann auch vorgesehen sein, mit mehreren Umlenkflächen nachzuweisendes Licht auf mehrere Lichtempfänger zu leiten oder Sendelicht von mehreren Lichtsendern zu der Strahlteilungsfläche zu lenken. Bei einer besonders einfachen und preiswerten Gestaltung ist aber genau eine Umlenkfläche vorhanden, um Licht zwischen der Strahlteilungsfläche und dem Lichtempfänger oder bei anderen Ausführungen zwischen der Strahlteilungsfläche und dem Lichtsender umzulenken.

Es können auch mehrere Lichtsender vorhanden und nebeneinander angeordnet sein. Vorzugsweise weist das Lichtführungselement bei dieser Ausführung unterschiedliche Eintrittsflächen nebeneinander für das Sendelicht der verschiedenen Lichtsender auf.

Das Lichtführungselement ist bevorzugt so geformt, dass sein von der Strahlteilungsfläche zur Eintrittsfläche verlaufender Bereich zapfenartig von der Strahlteilungsfläche hervorsteht. Ein Querschnitt des zapfenartig hervorstehenden Bereichs ist kleiner als die Stahlteilungsfläche. Dadurch kann ein äußerer Bereich der Strahlteilungsfläche, an dem kein zapfenartiger Bereich angrenzt, als Reflexionsbereich dienen. Für einen Lichtsender können auch mehrere zapfenartige Bereiche vorgesehen sein.

Sind mehrere Lichtsender vorhanden, so kann für jeden Lichtsender jeweils ein oder mehrere zapfenartig hervorstehende Bereiche vorgesehen sein, die jeweils eine Eintrittsfläche aufweisen. Die Strahlteilungsfläche umfasst hier mehrere Transmissionsbereiche, welche durch die angrenzenden zapfenartig hervorstehenden Bereiche gebildet sind. Abhängig von Form und Anordnung der zapfenartig hervorstehenden Bereiche resultieren genau ein zusammenhängender Reflexionsbereich oder mehrere voneinander getrennte Reflexionsbereiche, an welchen die Strahlteilungsfläche an Luft oder eine spiegelnde Beschichtung grenzt.

Bei einer Abwandlung der vorstehenden Ausführung wird über einen oder mehrere zapfenartige Bereiche nicht Sendelicht geleitet, sondern nachzuweisendes Licht, welches sodann auf einen oder mehrere Lichtempfänger trifft.

Weitere Merkmale und Vorteile des erfindungsgemäßen optischen Sensors werden nachfolgend mit Bezug auf die beigefügten schematischen Figuren beschrieben. Hierin zeigen:
- Fig. 1: eine Perspektivansicht eines Lichtführungselements einer Ausführungsform eines erfindungsgemäßen optischen Sensors;
- Fig. 2: eine perspektivische Drahtgitteransicht des Lichtführungselements aus Fig. 1
- Fig. 3: eine Schnittansicht des Ausführungsbeispiels des erfindungsgemäßen Sensors, wobei Sendelicht schematisch eingezeichnet ist, und
- Fig. 4: eine Schnittansicht des Ausführungsbeispiels des erfindungsgemäßen Sensors, wobei nachzuweisendes Licht schematisch eingezeichnet ist.

Gleiche und gleich wirkende Komponenten sind in den Figuren in der Regel mit übereinstimmendem Bezugszeichen versehen.

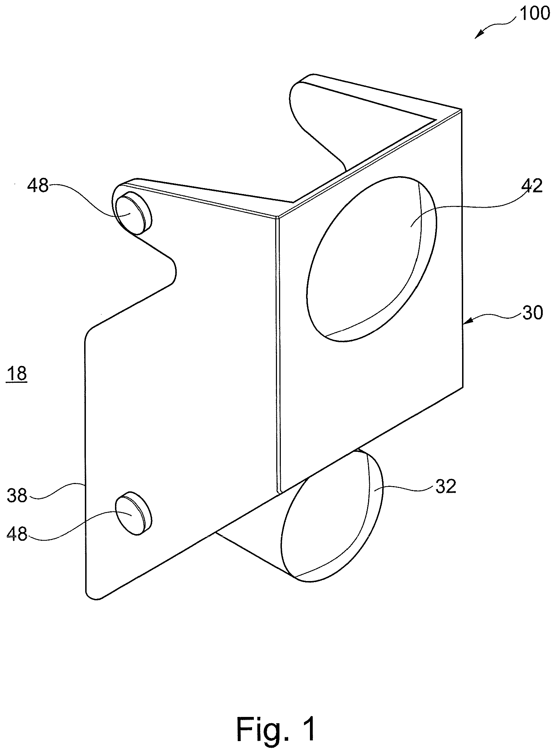

Ein Ausführungsbeispiel eines erfindungsgemäßen optischen Sensors 100 wird mit Bezug auf die Figuren 1 bis 4 beschrieben. Der optische Sensor 100 weist als wesentliche Komponenten einen Lichtsender 10, einen Lichtempfänger 20 und ein Lichtführungselement 30 auf.

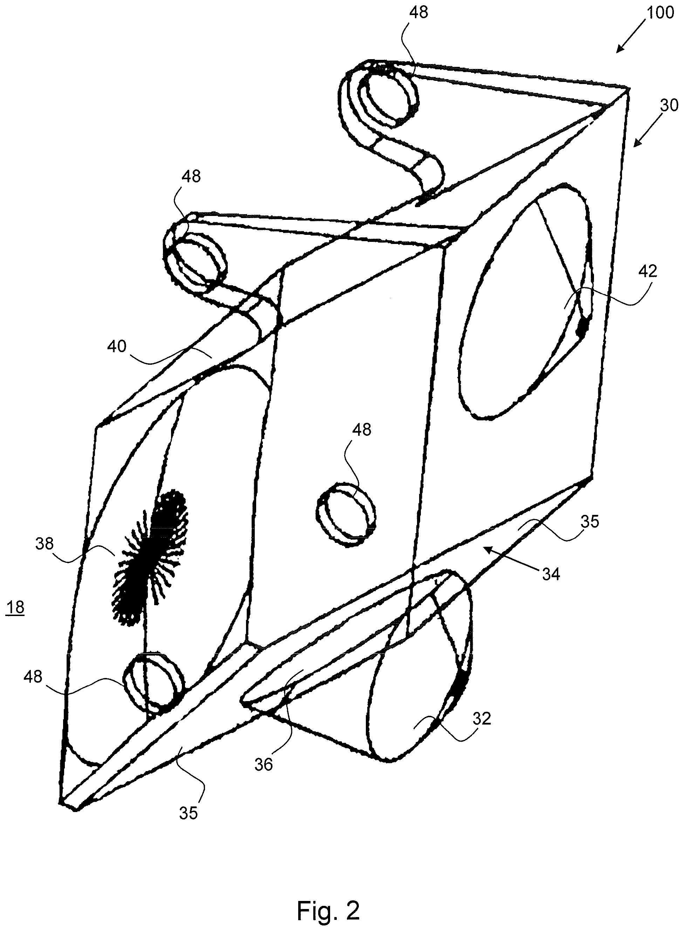

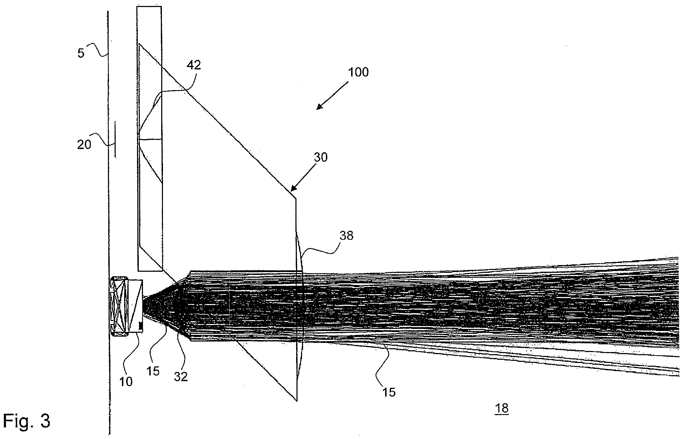

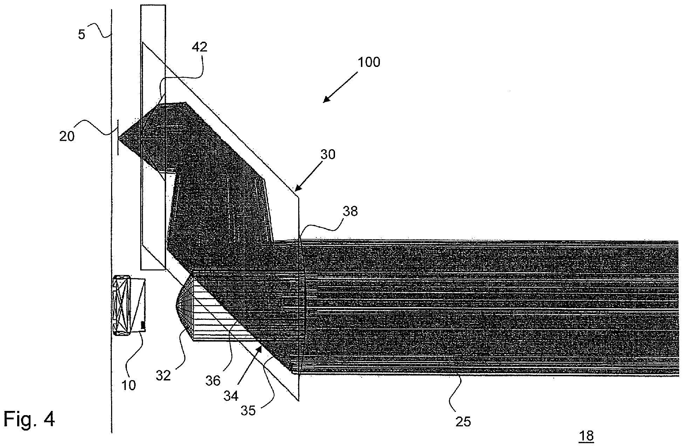

Figur 1 zeigt eine Perspektivansicht des Lichtführungselements 30. Dieses ist in Figur 2 perspektivisch als Drahtgitter gezeigt, das heißt, sowohl die von einem Betrachtungspunkt sichtbaren Kanten als auch die verdeckten Kanten sind dargestellt. Die Figuren 3 und 4 zeigen jeweils eine Schnittansicht des optischen Sensors 100. Dabei ist in Figur 3 ein simulierter Strahlengang des Sendelichts 15 eingezeichnet, während Figur 4 den simulierten Verlauf des nachzuweisenden Lichts 25 darstellt.

Im Betrieb strahlt der Lichtsender 10 Sendelicht 15 aus, welches über das Lichtführungselement 30 in einen Überwachungsraum 18 geleitet wird. Trifft das Sendelicht 15 auf ein Objekt, kann von diesem Licht zurückgeworfen werden. Der Anteil dieses zurückgeworfenen Lichts, der vom Lichtempfänger 20 gemessen wird und/oder der vom Lichtführungselement geleitet wird, wird als nachzuweisendes Licht 25 bezeichnet. Das nachzuweisende Licht 25 wird über das Lichtführungselement 30 zu dem Lichtempfänger 20 geleitet.

Das Lichtführungselement 30 ist einteilig gebildet und erfüllt die Funktion mehrerer herkömmlicher optischer Elemente.

Das Lichtführungselement 30 umfasst zunächst eine Eintrittsfläche 32, an welcher Sendelicht 15 in das Lichtführungselement 30 eintritt. Die Eintrittsfläche 32 kann nach außen gewölbt sein und so die Funktion einer Sammellinse erfüllen. Dadurch muss keine separate Linse zwischen dem Lichtsender 10 und dem Lichtführungselement 30 vorhanden sein.

Die Eintrittsfläche 32 ist die Stirnfläche eines zapfenartig hervorstehenden Bereichs des Lichtführungselements 30. Die Querschnittsfläche, an welcher der zapfenartig hervorstehende Bereich in einen Grundkörper des Lichtführungselements 30 übergeht, wird als Transmissionsbereich 36 bezeichnet. Wegen der einstückigen Ausführung des Lichtführungselements 30 gibt es am Transmissionsbereich 36 keine Unterbrechung, Lücke oder Materialwechsel. Daher wird hier das Sendelicht 15 ungehindert transmittiert.

Ein Bereich, welcher den Transmissionsbereich außen umgibt und an den nicht der zapfenartig hervorstehende Bereich angrenzt, ist ein Reflexionsbereich 35 für nachzuweisendes Licht 25 und wird im Späteren näher beschrieben.

Das Sendelicht 15 durchquert vom Transmissionsbereich 36 aus weiter das Lichtführungselement 30 und verlässt dieses an einer Endfläche 38. Von dort gelangt es in den Überwachungsraum 18.

Die Endfläche 38 kann ebenfalls gewölbt sein und so die Wirkung einer Linse erzielen. Beim dargestellten Ausführungsbeispiel verläuft das Sendelicht 15 von der Eintrittsfläche 32 bis zur Endfläche 38 durchgängig im Material des Lichtführungselements 30.

Nachzuweisendes Licht 25 aus dem Überwachungsraum 18 tritt an der Endfläche 38 in das Lichtführungselement 30 ein, siehe Fig. 4. Somit stimmt eine optische Achse des nachzuweisenden Lichts 25 im Überwachungsraum 18 mit dem Strahlengang des Sendelichts 15 im Überwachungsraum 18 überein. Hierbei können Strahlquerschnitt und Öffnungswinkel beim nachzuweisenden Licht 25 größer sein als beim Sendelicht 15.

Ab der Endfläche 38 durchquert das nachzuweisende Licht 25 das Lichtführungselement 30, bis es zumindest teilweise auf den Reflexionsbereich 35 trifft. Der Reflexionsbereich 35 bildet zusammen mit dem Transmissionsbereich 36 eine Strahlteilungsfläche 34. Am Reflexionsbereich 35 wird das nachzuweisende Licht 25 innerhalb des Lichtführungselements 30 abgelenkt. Der Reflexionsbereich 35 kann eine Grenzfläche des Lichtführungselements 30 zu Luft sein. In diesem Fall ist die Ausrichtung des Reflexionsbereichs in Bezug auf die Ausbreitungsrichtung des auftreffenden nachzuweisenden Lichts 25 so, dass Totalreflexion eintritt. Insbesondere für andere Reflexionswinkel kann an dem Reflexionsbereich des Lichtführungselements aber auch eine Spiegelschicht angrenzen (nicht dargestellt).

Vom Reflexionsbereich 35 gelangt das nachzuweisende Licht 25 auf eine Umlenkfläche 40 des Lichtführungselements 30. Wie auch der Reflexionsbereich 35, kann die Umlenkfläche 40 eine Außenfläche des Lichtführungselements 30 sein, welche mit einer Spiegelschicht versehen ist oder an Luft angrenzt und so ausgerichtet ist, dass sie mittels Totalreflexion das nachzuweisende Licht 25 umlenkt. Weitere Umlenkflächen für Sendelicht 15 und/oder nachzuweisendes Licht 25 können vorgesehen sein (nicht dargestellt).

Von der Umlenkfläche 40 kommend verlässt das nachzuweisende Licht 25 das Lichtführungselement 30 an einer Austrittsfläche 42. Die Austrittsfläche 42 hat erfindungsgemäß eine nach außen gewölbte Form, wodurch das nachzuweisende Licht 25 auf einen Fokus gebündelt wird. An diesem Fokus befindet sich der Lichtempfänger 20. Durch die fokussierende Wirkung kann auf eine separate Linse zwischen dem Lichtempfänger 20 und der Austrittsfläche 42 verzichtet werden.

Mit der Umlenkung im Lichtführungselement 30 wird ein paralleler Strahlengang von Sendelicht 15 und nachzuweisendem Licht 25 im Überwachungsraum 18 auch dann bewirkt, wenn eine optische Achse von nachzuweisendem Licht 25 unmittelbar vom Lichtempfänger 20 und eine optische Achse von Sendelicht 15 unmittelbar am Lichtsender 10 parallel und versetzt zueinander verlaufen. Dadurch wird ermöglicht, dass der Lichtsender 10 und der Lichtempfänger 20 auf einer gemeinsamen Leiterplatte 5 des optischen Sensors 100 angeordnet sein können.

Der Reflexionsbereich 35 und die Umlenkfläche 40 können wie auch die Eintrittsfläche 32 und die Austrittsfläche 42 gewölbt sein. Die Wölbungen sind dabei so gewählt, dass nachzuweisendes Licht 25, welches als paralleles Strahlenbündel an der Endfläche 38 eintritt oder alternativ von einem bestimmten Punkt im Überwachungsraum 18 divergent ausgehend an der Endfläche 38 eintritt, auf den Lichtempfänger 20 fokussiert wird. In entsprechender Weise sind die Wölbungen auch so gewählt, dass vom Lichtsender 10 ausgehendes Sendelicht 15 als paralleles Strahlenbündel in den Überwachungsraum 18 geleitet wird, oder auf einen bestimmten Punkt im Überwachungsraum 18 fokussiert wird, oder geringfügig divergent in den Überwachungsraum 18 abgegeben wird.

Während bei dem dargestellten Ausführungsbeispiel das nachzuweisende Licht 25 über den Reflexionsbereich 35 und die Umlenkfläche 40 geleitet wird, kann bei anderen Ausführungsformen stattdessen das Sendelicht über die Umlenkfläche und den Reflexionsbereich geleitet werden. Gegenüber der abgebildeten Ausführungsform können in diesem Fall die Positionen des Lichtsenders und des Lichtempfängers miteinander vertauscht sein.

Mit dem Lichtführungselement 30 des erfindungsgemäßen optischen Sensors 100 werden in einem einzigen Bauteil die Funktionen mehrerer Komponenten herkömmlicher optischer Sensoren erfüllt. Diese Komponenten umfassen insbesondere eine Sammellinse für Sendelicht, eine Sammellinse für nachzuweisendes Licht, einen Strahlteiler, einen Umlenkspiegel zwischen dem Strahlteiler und dem Lichtsender oder -empfänger sowie eine dem Überwachungsraum zugewandte Linse. Durch die reduzierte Komponentenanzahl wird zum einen eine günstigere Herstellung ermöglicht. Zum anderen werden Positionierungsungenauigkeiten, die zwischen verschiedenen Komponenten auftreten, vermieden. Dadurch wird die Qualität der Strahlführung verbessert. Zudem wird durch die verringerte Anzahl an Komponenten auch die Zahl an Grenzflächen reduziert, an denen Lichtverluste eintreten.

## Patentansprüche

1. Optischer Sensor zum Überwachen eines Überwachungsraums (18) mit mindestens einem Lichtsender (10) zum Aussenden von Sendelicht (15) in den Überwachungsraum (18) und mit mindestens einem Lichtempfänger (20) zum Messen von nachzuweisendem Licht (25) aus dem Überwachungsraum (18), wobei ein einstückig gefertigtes Lichtführungselement (30) vorhanden ist zum Leiten von Sendelicht (15) in Richtung des Überwachungsraums (18) und zum Leiten von nachzuweisendem Licht (25) zum Lichtempfänger (20),
wobei das Lichtführungselement (30) aufweist:
- eine Eintrittsfläche (32) für Sendelicht (15), an welcher im Betrieb Sendelicht (15) in das Lichtführungselement (30) eintritt,
- eine Endfläche (38), an welcher im Betrieb Sendelicht (15) aus dem Lichtführungselement (30) in Richtung des Überwachungsraums (18) austritt und an welcher nachzuweisendes Licht (25) aus dem Überwachungsraum (18) in das Lichtführungselement (30) eintritt,
- eine Strahlteilungsfläche (34) mit mindestens einem Transmissionsbereich (36) und mindestens einem Reflexionsbereich (35), welche so angeordnet sind, dass von der Eintrittsfläche (32) kommendes Sendelicht (15) zur Endfläche (38) geleitet wird und von der Endfläche (38) kommendes nachzuweisendes Licht (25) zumindest teilweise auf einen Strahlengang geleitet wird, der von dem Strahlengang des Sendelichts (15) verschieden ist,
- eine Austrittsfläche (42) für nachzuweisendes Licht (25), an welcher im Betrieb nachzuweisendes Licht (25), das von der Strahlteilungsfläche (34) kommt, aus dem Lichtführungselement (30) austritt,
- mindestens eine Umlenkfläche (40), mit welcher Licht (15, 25), dessen Strahlengang über den mindestens einen Reflexionsbereich (35) verläuft, innerhalb des Lichtführungselements (30) abgelenkt wird, und
- einen Bereich lichtsammelnder Wirkung (42) zum Konzentrieren von nachzuweisendem Licht (25) auf den Lichtempfänger (20).
**dadurch gekennzeichnet,**
**dass** das Lichtführungselement (30) ein Kunststoffformteil ist,
**dass** der Transmissionsbereich (36) und der Reflexionsbereich (35) räumlich getrennt sind,
**dass** die Umlenkfläche (40) und der Reflexionsbereich (35) eine Grenze des Materials des Lichtführungselements (30) zur Umgebungsluft bilden,
**dass** eine Ausrichtung der Umlenkfläche (40) und des Reflexionsbereichs (35) so gewählt ist, dass weiterzuleitendes Licht unter einem Winkel auftritt, bei dem Totalreflexion auftritt und
**dass** aus der Austrittsfläche (42) der Bereich lichtsammelnder Wirkung gebildet ist durch eine nach außen gewölbte Form.

2. Optischer Sensor nach Anspruch 1, **dadurch gekennzeichnet,**
**dass** das Lichtführungselement (30) so geformt ist,
- **dass** nachzuweisendes Licht (25) von der Endfläche (38) bis zur Austrittsfläche (42) durchgängig innerhalb des Materials des Lichtführungselements (30) leitbar ist und/oder
- **dass** Sendelicht (15) von der Eintrittsfläche (32) bis zu der Endfläche (38) durchgängig innerhalb des Materials des Lichtführungselements (30) leitbar ist.

3. Optischer Sensor nach einem der Ansprüche 1 bis 2, **dadurch gekennzeichnet, dass** das Lichtführungselement (30) für Sendelicht (15) eine lichtsammelnde Wirkung hat, um von dem Lichtsender (10) divergent ausgesendetes Sendelicht (15) gebündelt in Richtung des Überwachungsraums (18) weiterzuleiten.

4. Optischer Sensor nach Anspruch 3, **dadurch gekennzeichnet,**
**dass** die lichtsammelnde Wirkung für Sendelicht (15) zumindest teilweise durch die Eintrittsfläche (32) erzeugt wird.

5. Optischer Sensor nach einem der Ansprüche 1 bis 4, **dadurch gekennzeichnet,**
**dass** das Lichtführungselement (30) für nachzuweisendes Licht (25), welches als paralleles Strahlenbündel an der Endfläche (38) eintritt, solch eine lichtsammelnde Wirkung hat, dass es auf den Lichtempfänger (20) gebündelt wird, und dass das Lichtführungselement (30) für Sendelicht (15), welches von dem Lichtsender (10) divergent ausgeht, solch eine lichtsammelnde Wirkung hat, dass es als paralleles Strahlenbündel an der Endfläche (38) austritt.

6. Optischer Sensor nach einem der Ansprüche 1 bis 5, **dadurch gekennzeichnet,**
**dass** das Lichtführungselement (30) so geformt ist, dass eine optische Achse von nachzuweisendem Licht (25), das von der Austrittsfläche (42) zum Lichtempfänger (20) läuft, parallel liegt zu einer optischen Achse von Sendelicht (15), das vom Lichtsender (10) zur Eintrittsfläche (32) läuft.

7. Optischer Sensor nach einem der Ansprüche 1 bis 6,
**dadurch gekennzeichnet,**
**dass** der Transmissionsbereich (36) der Strahlteilungsfläche (34) ein zentraler Bereich der Strahlteilungsfläche (34) ist, auf welchen Sendelicht (15) geleitet wird, und
**dass** der Reflexionsbereich (35) der Strahlteilungsfläche (34) den Transmissionsbereich (36) umgibt und im Betrieb nachzuweisendes Licht (25) in Richtung der Umlenkfläche (40) und weiter zum Lichtempfänger (20) leitet.

8. Optischer Sensor nach einem der Ansprüche 1 bis 7, **dadurch gekennzeichnet,**
**dass** der mindestens eine Reflexionsbereich (35) der Strahlteilungsfläche (34) eine gewölbte Form hat zum Bereitstellen einer lichtlenkenden Wirkung für reflektiertes Licht (15, 25).

9. Optischer Sensor nach einem der Ansprüche 1 bis 8, **dadurch gekennzeichnet,**
**dass** der mindestens eine Reflexionsbereich (35) der Strahlteilungsfläche (34) gebildet ist durch einen Grenzübergang des Lichtführungselements (30) zu einer Spiegelschicht, die auf dem Lichtführungselement (30) angebracht ist.

10. Optischer Sensor nach einem der Ansprüche 1 bis 9, **dadurch gekennzeichnet,**
**dass** die Umlenkfläche (40) gewölbt ist zum Bereitstellen einer fokussierenden Wirkung von auftreffendem Licht (15, 25).

11. Optischer Sensor nach einem der Ansprüche 1 bis 10, **dadurch gekennzeichnet,**
**dass** mehrere Lichtsender (10) vorhanden und nebeneinander angeordnet sind und dass für das Sendelicht (15) verschiedener Lichtsender (10) unterschiedliche Eintrittsflächen (32) nebeneinander am Lichtführungselement (30) vorhanden sind.

12. Optischer Sensor nach einem der Ansprüche 1 bis 11 **dadurch gekennzeichnet,**
**dass** das Lichtführungselement (30) so geformt ist, dass sein von der Strahlteilungsfläche (34) zur Eintrittsfläche (32) verlaufender Bereich zapfenartig hervorsteht, und dass für jeden Lichtsender (10) jeweils ein zapfenartig hervorstehender Bereich mit jeweils einer Eintrittsfläche (32) vorhanden ist.

## Claims

1. Optical sensor for the surveillance of a surveillance space (18) having at least one light transmitter (10) for emitting transmission light (15) into the surveillance space (18) and at least one light receiver (20) for measuring of light to be detected (25) from the surveillance space (18),
a one-piece light-guiding element (30) being present for guiding of transmission light (15) in the direction of the surveillance space (18) and for guiding of light to be detected (25) to the light receiver (20),
the light-guiding element (30) comprising:
- an entrance surface (32) for transmission light (15) at which, in operation, transmission light (15) enters into the light-guiding element (30),
- a terminal surface (38) at which, in operation, transmission light (15) exits the light-guiding element (30) in the direction of the surveillance space (18) and at which light to be detected (25) from the surveillance space (18) enters into the light-guiding element (30),
- a beam splitter surface (34) with at least one transmission region (36) and at least one reflection region (35) which are arranged such that transmission light (15) coming from the entrance surface (32) is being guided to the terminal surface (38) and light to be detected (25) coming from the terminal surface (38) is being guided, at least partially, on a beam path which is different from the beam path of the transmission light (15),
- an exit surface (42) for light to be detected (25) at which, in operation, light to be detected (25) coming from the beam splitter surface (34) exits the light-guiding element (30),
- at least one deflection surface (40) with which light (15, 25), the beam path of which runs via the at least one reflection region (35), is deflected within the light-guiding element (30), and
- a region with a light collecting effect (42) for concentrating of light to be detected (25) on the light receiver (20),
**characterized in**
**that** the light-guiding element (30) is a molded plastic component,
**that** the transmission region (36) and the reflection region (35) are spatially separated,
**that** the deflection surface (40) and the reflection region (35) form an interface of the material of the light-guiding element (30) to the ambient air,
**that** an orientation of the deflection surface (40) and of the reflection region (35) is selected such that light to be passed on impinges at an angle at which total reflection occurs and
**that** the region with a light collecting effect is formed out of the the exit surface (42) by an outwardly bulged form.

2. Optical sensor according to claim 1,
**characterized in**
**that** the light-guiding element (30) is formed in such a way
- **that** light to be detected (25) can be guided continually within the material of the light-guiding element (30) from the terminal surface (38) to the exit surface (42) and/or
- **that** transmission light (15) can be guided continually within the material of the light-guiding element (30) from the entrance surface (32) to the terminal surface (38).

3. Optical sensor according to one of the claims 1 to 2,
**characterized in**
**that** the light-guiding element (30) has a light collecting effect for transmission light (15) for a concentrated passing on of transmission light (15) being emitted divergently by the light transmitter (10) in the direction of the surveillance space (18).

4. Optical sensor according to claim 3,
**characterized in**
**that** the light collecting effect for transmission light (15) is at least partially produced by the entrance surface (32).

5. Optical sensor according to one of the claims 1 to 4,
**characterized in**
**that** the light-guiding element (30) has such a light-collecting effect for light to be detected (25) entering at the terminal surface (38) as a parallel beam that it is concentrated on the light receiver (20) and
**that** the light-guiding element (30) has such a light-collecting effect for transmission light (15) coming divergently from the light transmitter (10) that it exits at the terminal surface (38) as a parallel beam.

6. Optical sensor according to one of the claims 1 to 5,
**characterized in**
**that** the light-guiding element (30) is formed such that an optical axis of light to be detected (25) which passes from the exit surface (42) to the light receiver (20) is parallel to an optical axis of transmission light (15) which passes from the light transmitter (10) to the entrance surface (32).

7. Optical sensor according to one of the claims 1 to 6,
**characterized in**
**that** the transmission region (36) of the beam splitter surface (34) is a central region of the beam splitter surface (34) to which transmission light (15) is being guided and
**that** the reflection region (35) of the beam splitter surface (34) surrounds the transmission region (36) and, in operation, passes on light to be detected (25) in the direction of the deflection surface (40) and further to the light receiver (20).

8. Optical sensor according to one of the claims 1 to 7,
**characterized in**
**that** the at least one reflection region (35) of the beam splitter surface (34) has a bulged form for providing a light-directing effect for reflected light (15, 25).

9. Optical sensor according to one of the claims 1 to 8,
**characterized in**
**that** the at least one reflection region (35) of the beam splitter surface (34) is formed by a transition of the light-guiding element (30) to a mirror layer which is applied on the light-guiding element (30).

10. Optical sensor according to one of the claims 1 to 9,
**characterized in**
**that** the deflection surface (40) is bulged for providing a focusing effect to impinging light (15, 25).

11. Optical sensor according to one of the claims 1 to 10,
**characterized in**
**that** a plurality of light transmitters (10) are present which are arranged next to each other and
**that** different entrance surfaces (32) are present next to each other at the light-guiding element (30) for the transmission light (15) of different light transmitters (10).

12. Optical sensor according to one of the claims 1 to 11,
**characterized in**
**that** the light-guiding element (30) is formed such that its region passing from the beam splitter surface (34) to the entrance surface (32) is protruding in a pin-like form and
**that** for every light transmitter (10), in each case, a pin-like protruding region with, in each case, an entrance surface (32) is present.

## Revendications

1. Capteur optique destiné à surveiller un espace de surveillance (18), ledit capteur étant pourvu d'au moins un émetteur de lumière (10) destiné à émettre une lumière émise (15) dans l'espace de surveillance (18) et d'au moins un récepteur de lumière (20) destiné à mesurer la lumière (25) à détecter provenant de l'espace de surveillance (18),
dans lequel un élément de guidage de lumière (30) fabriqué d'une seule pièce est présent, et est destiné à guider la lumière émise (15) en direction de l'espace de surveillance (18) et à guider la lumière (25) à détecter vers le récepteur de lumière (20),
dans lequel l'élément de guidage de lumière (30) présente :
- une surface d'entrée (32) pour la lumière émise (15), au niveau de laquelle, pendant le fonctionnement, la lumière émise (15) pénètre dans l'élément de guidage de lumière (30),
- une surface terminale (38), au niveau de laquelle, pendant le fonctionnement, la lumière émise (15) sort de l'élément de guidage de lumière (30) en direction de l'espace de surveillance (18) et au niveau de laquelle la lumière (25) à détecter provenant de l'espace de surveillance (18) pénètre dans l'élément de guidage de lumière (30),
- une surface de séparation de faisceau (34) pourvue d'au moins une zone de transmission (36) et d'au moins une zone de réflexion (35), lesquelles sont agencées de telle sorte que la lumière émise (15) provenant de la surface d'entrée (32) est guidée vers la surface terminale (38) et que la lumière (25) à détecter provenant de la surface terminale (38) est guidée au moins en partie sur un chemin optique, qui est différent du chemin optique de la lumière émise (15),
- une surface de sortie (42) pour la lumière (25) à détecter, au niveau de laquelle, pendant le fonctionnement, la lumière (25) à détecter, qui provient de la surface de séparation de faisceau (34), sort de l'élément de guidage de lumière (30),
- au moins une surface de déflexion (40), au moyen de laquelle la lumière (15, 25), dont le chemin optique s'étend sur l'au moins une zone de réflexion (35), est défléchie à l'intérieur de l'élément de guidage de lumière (30), et
- une zone à action concentratrice de lumière (42) destinée à concentrer la lumière (25) à détecter sur le récepteur de lumière (20),
**caractérisé**
**en ce que** l'élément de guidage de lumière (30) est une pièce moulée en matière plastique,
**en ce que** la zone de transmission (36) et la zone de réflexion (35) sont séparées spatialement,
**en ce que** la surface de déflexion (40) et la zone de réflexion (35) forment une limite entre le matériau de l'élément de guidage de lumière (30) et l'air ambiant,
**en ce qu'**une orientation de la surface de déflexion (40) et de la zone de réflexion (35) est choisie de telle sorte que la lumière à transmettre est incidente selon un angle pour lequel une réflexion totale apparaît et
**en ce que**, à partir de la surface de sortie (42), la zone à action concentratrice de lumière est formée par une forme bombée vers l'extérieur.

2. Capteur optique selon la revendication 1,
**caractérisé**
**en ce que** l'élément de guidage de lumière (30) est formé de sorte
- que la lumière (25) à détecter peut être guidée en continu de la surface terminale (38) jusqu'à la surface de sortie (42) à l'intérieur du matériau de l'élément de guidage de lumière (30) et/ou
- que la lumière émise (15) peut être guidée en continu de la surface d'entrée (32) jusqu'à la surface terminale (38) à l'intérieur du matériau de l'élément de guidage de lumière (30).

3. Capteur optique selon l'une quelconque des revendications 1 à 2,
**caractérisé**
**en ce que** l'élément de guidage de lumière (30) a une action concentratrice de lumière pour la lumière émise (15), afin de transmettre la lumière émise (15), émise de façon divergente par l'émetteur de lumière (10), de manière focalisée en direction de l'espace de surveillance (18).

4. Capteur optique selon la revendication 3,
**caractérisé**
**en ce que** l'action concentratrice de lumière pour la lumière émise (15) est produite au moins en partie par la surface d'entrée (32).

5. Capteur optique selon l'une quelconque des revendications 1 à 4,
**caractérisé**
**en ce que** l'élément de guidage de lumière (30) pour la lumière (25) à détecter, laquelle entre au niveau de la surface terminale (38) sous la forme d'un faisceau de rayons parallèles, a une action concentratrice de lumière telle qu'elle est focalisée sur le récepteur de lumière (20), et en ce que l'élément de guidage de lumière (30) présente pour la lumière émise (15), laquelle part de façon divergente de l'émetteur de lumière (10), une action concentratrice de lumière telle qu'elle sort au niveau de la surface terminale (38) sous la forme d'un faisceau de rayons parallèles.

6. Capteur optique selon l'une quelconque des revendications 1 à 5,
**caractérisé**
**en ce que** l'élément de guidage de lumière (30) est formé de telle sorte qu'un axe optique de lumière (25) à détecter, laquelle circule de la surface de sortie (42) au récepteur de lumière (20), se situe parallèlement à un axe optique de lumière émise (15), laquelle circule de l'émetteur de lumière (10) à la surface d'entrée (32).

7. Capteur optique selon l'une quelconque des revendications 1 à 6,
**caractérisé**
**en ce que** la zone de transmission (36) de la surface de séparation de faisceau (34) est une zone centrale de la surface de séparation de faisceau (34) sur laquelle la lumière émise (15) est guidée, et
**en ce que** la zone de réflexion (35) de la surface de séparation de faisceau (34) entoure la zone de transmission (36) et, pendant le fonctionnement, guide la lumière (25) à détecter en direction de la surface de déflexion (40) et plus loin en direction du récepteur de lumière (20).

8. Capteur optique selon l'une quelconque des revendications 1 à 7,
**caractérisé**
**en ce que** l'au moins une zone de réflexion (35) de la surface de séparation de faisceau (34) présente une forme bombée pour permettre d'obtenir une action directrice de lumière pour la lumière (15, 25) réfléchie.

9. Capteur optique selon l'une quelconque des revendications 1 à 8,
**caractérisé**
**en ce que** l'au moins une zone de réflexion (35) de la surface de séparation de faisceau (34) est formée par un passage de limite entre l'élément de guidage de lumière (30) et une couche réfléchissante, qui est appliquée sur l'élément de guidage de lumière (30).

10. Capteur optique selon l'une quelconque des revendications 1 à 9,
**caractérisé**
**en ce que** la surface de déflexion (40) est bombée pour permettre d'obtenir une action focalisatrice de la lumière (15, 25) incidente.

11. Capteur optique selon l'une quelconque des revendications 1 à 10,
**caractérisé**
**en ce que** plusieurs émetteurs de lumière (10) sont présents et agencés les uns à côté des autres et en ce que, pour la lumière émise (15) de différents émetteurs de lumière (10), différentes surfaces d'entrée (32) sont présentes les unes à côté des autres sur l'élément de guidage de lumière (30).

12. Capteur optique selon l'une quelconque des revendications 1 à 11,
**caractérisé**
**en ce que** l'élément de guidage de lumière (30) est formé de telle sorte que sa zone s'étendant de la surface de séparation de faisceau (34) à la surface d'entrée (32) fait saillie de façon conique, et en ce que, pour chaque émetteur de lumière (10), respectivement une zone faisant saillie de façon conique et pourvue respectivement d'une surface d'entrée (32) est présente.
